# EUROPÄISCHE PATENTSCHRIFT

(11) **EP 1 890 159 B1**
(45) Veröffentlichungstag und Bekanntmachung des Hinweises auf die Patenterteilung: **22.09.2010**
(21) Anmeldenummer: 07013188.3
(22) Anmeldetag: 05.07.2007
(51) Int. Cl.: G01P 3/487, G01P 3/488, G01P 21/02

(54) **Verfahren und Vorrichtung zum Erkennen einer Unterspannungsversorgung wenigstens eines Hallsensors**
Method and device for recognising low voltage supply of at least one Hall sensor
Procédé et dispositif destinés à la détection d'une alimentation en sous-tension d'au moins un capteur Hall

(30) Priorität: 09.08.2006 DE 102006037132
(43) Veröffentlichungstag der Anmeldung: 20.02.2008
(73) Patentinhaber: LuK Lamellen und Kupplungsbau Beteiligungs KG, 77815 Bühl (DE)
(72) Erfinder: Zimmermann, Martin, 77880 Sasbach (DE); Buchet, Wai-Wai, 67000 Strassburg (FR); Gerhart, Jürgen, 77767 Appenweier (DE)

(56) Entgegenhaltungen:
- EP-A- 1 339 578
- US-A- 5 001 406
- US-A1- 2006 006 822

## Beschreibung

Hallsensoren, deren Messprinzip darauf beruht, dass die Ladungsträger eines stromdurchflossenen Leiters von einem senkrecht zur Bewegungsbahn verlaufenden Magnetfeld abgelenkt werden, so dass an dem Bauteil eine Hallspannung abgegriffen werden kann, werden üblicherweise zur Drehzahl- und/oder Positionserkennung von sich bewegenden Bauteilen eingesetzt.

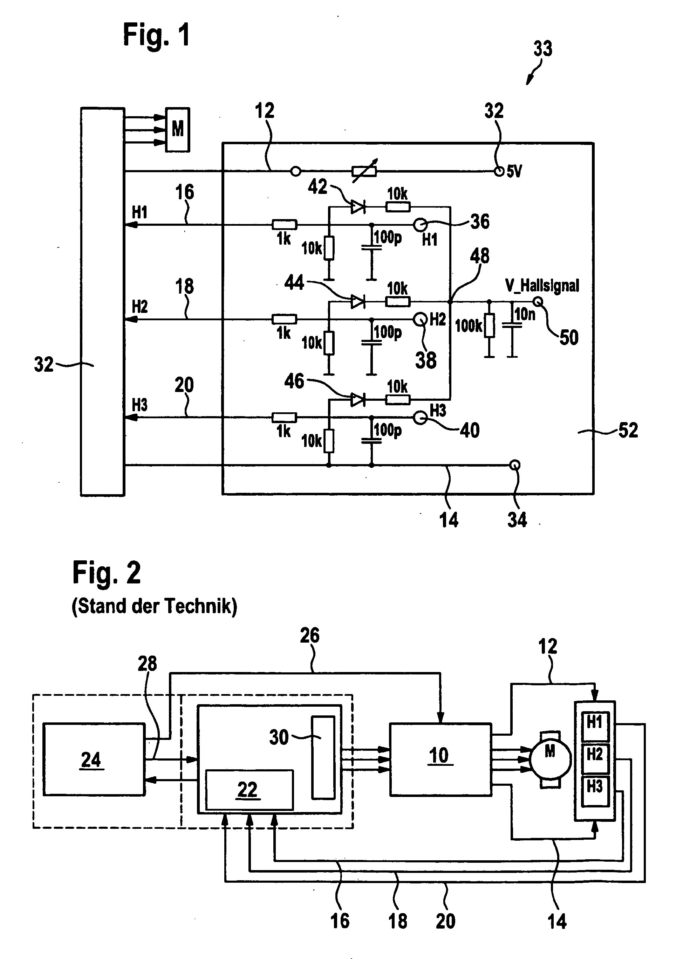

Eine typische Anwendung, bei der Hallsensoren sowohl zur Steuerung als auch zur Drehzahl- bzw. Drehpositionserkennung eines elektronisch kommutierten Elektromotors eingesetzt werden, ist in Fig. 2 dargestellt.

Drei Phasen eines dreiphasig arbeitenden, elektronisch kommutierten Elektromotors M werden von einer Steuerelektronik 10 angesteuert. Die Steuerelektronik liefert über Spannungsversorgungsleitungen 12 und 14 die Spannungsversorgung für Hallsensoren H1, H2 und H3, über die die Drehstellung des Rotors des Elektromotors M erfasst werden.

Ausgangssignale der Hallsensoren H1, H2 und H3 werden über Signalleitungen 16, 18 und 20 einer Drehstellungs- und Drehrichtungserfassungseinrichtung 22 zugeführt, deren Ausgangssignale einem Regler 24 zugeführt werden, in dem von dem von der augenblicklichen Drehstellung und Drehrichtung sowie der Drehgeschwindigkeit und einer Sollstellung und/oder Solldrehzahl und/oder Solldrehrichtung abhängige Ausgangssignale erzeugt werden, die über eine PWM-Signalleitung 26 der Steuerelektronik 10 zugeführt werden und über eine weitere Leitung 28 einer Kommutatorstufe 30 zugeführt werden, in der die notwendigen Umpolungen des Motors M berechnet werden, die dann der Steuerelektronik 10 zugeführt werden, deren Ausgänge die Wicklungen des Motors M nach Polung und Signalhöhe (Puls Weiten Moduliertes Signal) steuern. Die Einheiten 22, 24, 30 und 10 mit den zugehörigen Verbindungsleitungen sind beispielsweise in einem elektronischen Steuergerät zur Steuerung des Motors M und zur Spannungsversorgung der Hallsensoren H1, H2 und H3, die integrale Bestandteile des Motors M sind, vereint.

Die Ausgangssignale der Hallsensoren alternieren je nach Drehstellung des Rotors des Motors M zwischen einem Hochpegel und einem Niederpegel, wobei die Hallsensoren derart angeordnet sind, dass ständig mindestens ein Hochpegelsignal vorhanden ist. Ständig ist dabei nicht im strengen Wortsinn zu verstehen, da die Hochpegelsignale nicht überlappen müssen. Die Ausgangssignale der Hallsensoren werden vorteilhafterweise durch entsprechende A/D-Wandlerschaltungen digitalisiert, so dass sie in digitaler Form (0 oder 1) in der Einrichtung 22 für eine Auswertung zur Verfügung stehen.

Aufbau und Funktion der beschriebenen Anordnung, bei der der Motor M beispielsweise ein Aktor einer automatisch betätigten Kupplung oder ein Aktor eines automatischen Schaltgetriebes ist, sind an sich bekannt und werden daher nicht erläutert.

Ein Problem der beschriebenen Anordnung besteht darin, dass beispielsweise aufgrund hoher ohmscher Widerstände oder sonstiger Fehler in den Spannungsversorgungsleitungen 12 oder 14 die Versorgungsspannung der Hallsensoren unter die spezifizierte Versorgungsspannung abfällt, so dass deren Ausgangssignale für eine Auswertung unzureichend sind und die Drehstellung des Motors M nicht mehr erkannt werden. Da der Zustand der digitalisierten Ausgangssignale der Hallsensoren in diesem Fall eingefroren wird, wird der aktuelle Fehlerfall nicht erkannt, wenn der eingefrorene Hallzustand ein plausibler Zustand ist. Dies ist anhand der Tabelle 1 dargestellt, die Hallsensorzustände angibt.

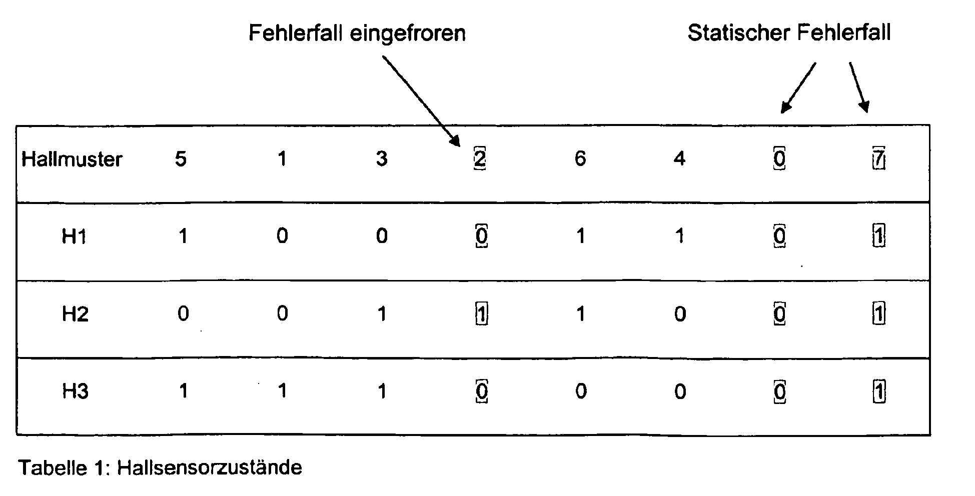

In der vierten Spalte (Hallmuster 2) ist ein im Fehlerfall eingefrorener Zustand angegeben, bei dem das Ausgangssignal der Hallsensoren H1 und H3 auf Niederpegel ist und das Ausgangssignal des Hallsensors H2 auf Hochpegel ist. Dieser Zustand ist ein plausibler Zustand, der nicht als Fehler erkannt wird. Fehlerzustände sind die Zustände 0 und 7, bei denen alle Ausgangssignale gleichzeitig 0 oder gleichzeitig 1 ist, was bei ordnungsgemäßer Funktion der Hallsensoren und ordnungsgemäßer Versorgungsspannung nicht der Fall sein kann.

Aus der US 2006/006822A1 ist ein Verfahren zum Betrieb eines EC-Motors bekannt, der einen Stator und einen Rotor aufweist, wobei eine Mehrzahl an Hallsensoren H1 bis H3 zur Ermittlung der relativen Lage zwischen Rotor und Stator vorgesehen sind. In einem Speicher ist eine Wertereferenzsequenz abgelegt, welche Referenzwerte enthält, die sich zyklisch wiederholen. Treten bei aktueller Messung Abweichungen von der Referenzwertesequenz auf, wird ein Fehlerzustand festgestellt.

Aus der EP 1 339 578 B1 ist ein aktiver Magnetsensor zur Erfassung des Drehverhaltens eines Rades bekannt, welcher eine Erkennung von Leitungsfehlern durch ein mit dem Sensor verbundenes elektronisches Steuergerät ermöglicht. Es ist hierbei ein Encoder vorgesehen, durch den ein magnetoelektrischer Wandler während der Drehung des Encoders magnetisch erregt wird, sodass diese ein periodisches elektronisches Signal erzeugt, aus der auf eine Unterspannungsversorgung geschlossen wird.

Aus der US 5,001,406 ist ein bürstenloser DC-Motor bekannt, welcher Halleffektelemente zur Messung der Drehzahl und Lage des Rotors aufweist.

Der Erfindung liegt die Aufgabe zugrunde, eine Möglichkeit anzugeben, mit der eine unzureichende Versorgungsspannung der Hallsensoren sicher erkannt werden kann, so dass die Möglichkeit, dass ein eingefrorener Fehlerfall als plausibel gewertet wird und nicht als Fehler erkannt wird, ausgeschlossen ist.

Eine Lösung dieser Aufgabe wird mit einem Verfahren zum Erkennen einer Unterspannungsversorgung wenigstens eines Hallsensors erzielt, welcher Hallsensor eine Bewegung eines Bauteils erfasst und bei sich bewegendem Bauteil alternierend ein Hochpegel- und ein Niederpegelsignal abgibt, wobei die Höhe des Hochpegelsignals von der Höhe der Versorgungsspannung des Hallsensors abhängt, bei welchem Verfahren, dass die Höhe des Hochpegelsignals bestimmt wird und ein Unterschreiten eines vorbestimmten Schwellwertes als Unterspannungsversorgung gewertet wird.

Eine vorteilhafte Durchführungsform des erfindungsgemäßen Verfahrens besteht darin, dass die Bewegung des Bauteils von mehreren, an einer gemeinsamen Versorgungsspannung liegenden Hallsensoren (H1, H2, H3) erfasst wird, deren Anzahl und Anordnung derart ist, dass ständig wenigstens ein Hallsensor ein Hochpegelsignal abgibt, dessen Höhe bestimmt wird, und ein Unterschreiten eines vorbestimmten Schwellwertes durch das Hochpegelsignal als Unterspannungsversorgung gewertet wird.

Eine erfindungsgemäße Vorrichtung zum Erkennen einer Unterspannungsversorgung einer Mehrzahl von an einer gemeinsamen Spannungsquelle liegenden Hallsensoren, die derart angeordnet sind, dass sie an ihrem Ausgang bei Bewegung eines Bauteils alternierend ein Hochpegelsignal und ein Niederpegelsignal abgeben, wobei die Höhe des Hochpegelsignals von der Höhe der Versorgungsspannung abhängt und die Anordnung und Anzahl der Hallsensoren derart ist, dass ständig wenigstens ein Hallsensor ein Hochpegelsignal abgibt ist, dadurch gekennzeichnet, dass die Ausgänge der Hallsensoren parallel zueinander an einer Spannungsmesseinrichtung liegen, an deren Eingang eine Spannung liegt, die im wesentlichen der höchsten Spannung der Ausgangssignale entspricht, und dass die Spannungsmesseinrichtung ein Fehlersignal erzeugt, wenn ihre Eingangsspannung einen vorbestimmten Schwellwert unterschreitet.

Vorteilhafterweise ist der Ausgang jedes Hallsensors über eine Gleichrichterdiode mit dem Eingang der Spannungsmesseinrichtung verbunden.

In einer Weiterbildung der erfindungsgemäßen Vorrichtung sind zwischen dem Eingang der Spannungsmesseinrichtung und jedem Hallsensor allen Hallsensoren gemeinsam ein Widerstand und dazu parallel ein Kondensator angeordnet, über die der Eingang der Spannungsmesseinrichtung mit Masse verbunden ist.

Der der Erfindung zugrunde liegende Grundgedanke, die effektive Versorgungsspannung des oder der Hallsensoren durch Auswertung von deren Ausgangssignalen zu ermitteln, kann für unterschiedlichste Anwendungen genutzt werden. Besonders vorteilhaft wird die Erfindung für Anordnungen angewendet, bei denen die Hallsensoren die Drehzustandsbestimmungssensorik eines elektronisch kommutierten Elektromotors bilden.

Dabei ist vorteilhaft, dass eine die Ausgänge der Hallsensoren mit der Spannungsmesseinrichtung und eine Auswerteschaltung zum Vergleichen der Eingangsspannung der Spannungsmesseinrichtung mit dem Schwellwert enthaltende Schaltung auf einer Platine angeordnet sind.

Die Fehlererkennungssicherheit kann durch eine Einrichtung zum Messen einer zur Versorgung der Hallsensoren dienenden Ausgangsspannung vergrößert werden.

Weiter ist vorteilhaft, die erfindungsgemäße Vorrichtung derart auszubilden, dass eine Einrichtung zum Überprüfen der Logik der Ausgangssignale der Hallsensoren vorgesehen ist.

Die Erfindung wird im Folgenden anhand einer schematischen Zeichnung beispielsweise und mit weiteren Einzelheiten erläutert.

In den Figuren stellen dar:
- Fig. 1: eine Schaltung zur Erläuterung zur Erfindung und
- Fig. 2: elektronisch kommutierten Gleichstrommotors mit dessen Steuerung gemäß dem Stand der Technik.

In Fig. 1 enthält eine insgesamt mit 32 bezeichnete elektronische Steuereinrichtung die Baugruppen 10, 22, 24 und 30. Die Spannungsversorgung der Hallsensoren H1, H2 und H3 (Fig. 2) erfolgt über Anschlüsse 33 und 34 an den Enden der Versorgungsleitungen 12 und 14. Die Ausgangssignale der Hallsensoren H1, H2 und H3 werden den Signalleitungen 16, 18 und 20 über die Anschlüsse 36, 38 und 40 zugeführt. Zur Filterung der an den Leitungen 16, 18 und 20 liegenden Signalen dienen je ein Widerstand und ein Kondensator, die parallel zueinander geschaltet sind. Zur Anpassung dient ein in der jeweiligen Signalleitung liegender ohmsche Widerstand.

Die Signalleitungen 16, 18 und 20 sind jeweils über eine Gleichrichterdiode 42, 44 und 46 und einen ohmschen Widerstand mit einem gemeinsamen Punkt 48 verbunden, der über eine aus einem Widerstand und einem Kondensator bestehende Filterschaltung mit einer Buchse 50 verbunden ist, an der ein Signal abgegriffen werden kann, das annähernd der jeweils maximalen Signalspannung der Hallsensoren H1, H2 und H3 entspricht und das mit einer durch die Filterschaltung gegebenen Zeitkonstanten gegenüber der jeweils maximalen Ausgangsspannung verzögert ist und gegebenenfalls abklingt.

Mit Hilfe der Dioden 42, 44 und 46 werden die Ausgangsspannungen der Hallsensoren H1, H2 und H3 "verodert". Die an der Buchse 50 abgreifbare Spannung ist weitgehend unabhängig davon, ob die Ausgangssignale von ein oder zwei Hallsensoren auf einem Hochpegel liegen. Ziel der in Fig. 1 verdeutlichten Schaltung ist, dass die an der Buchse 50 abgreifbare Spannung möglichst unabhängig davon ist, ob sich ein oder mehrere Ausgangssignale der Hallsensoren auf ihrem Hochpegel befinden, so dass dadurch ein möglichst kleiner Signalhub entsteht. Dadurch kann eine zu niedrige an den Hallsensoren tatsächlich liegende Versorgungsspannung deren Höhe die Höhe des Hochpegelsignals beeinflusst, möglichst genau bestimmt werden. Andererseits muss die Abklingzeitkonstante klein genug sein, um einen Abfall der Versorgungsspannung schnell genug zu erkennen. Die an der Buchse 50 liegende Spannung wird in einer nicht dargestellten Auswerteschaltung mit einem Schwellwert verglichen, der derart gewählt ist, dass oberhalb des Schwellwertes eine einwandfreie Verarbeitung der Ausgangssignale der Hallsensoren gewährleistet ist.

Typische Werte sind beispielsweise ein Hub der "veroderten" Hallspannung an der Buchse 50 von weniger als 200 mV. Eine Zeitkonstante der gefilterten, veroderten Hohlspannung von etwa 1 msec, wobei das A/D gewandelte Signal beispielsweise alle 2,5 msec abgetastet wird.

Vorteilhafterweise wird die an den Versorgungsleitungen 12 und 14 liegende Ausgangsspannung der elektronischen Steuereinrichtung 32 direkt in dieser gemessen, so dass eine Fehlerfreiheit der elektronischen Steuereinrichtung 32 sichergestellt werden kann. Weiter ist es zweckmäßig, die Logik der Ausgangssignale der Hallsensoren in der elektronischen Steuereinrichtung 32 zu überprüfen, so dass der statische Fehlerfall der Tabelle 1 erkannt werden kann.

In der nachfolgenden Tabelle 2 sind unterschiedliche mögliche Fehlerzustände und dereOn Erkennbarkeit angegeben.

**Tabelle 2: Fehlerzustände**

| Zustand | U Hall SG | U Hall Pegel | Logik Hallsignal | Defekt | Kommentar |
|---|---|---|---|---|---|
| 1 | n.o.k. | n.o.k. | n.o.k. | SG / Verkabelung | SG kann diagnostiziert werden wenn Motor abgesteckt |
| 2 | o.k. | o.k. | o.k. | - | Fehlerfreier Zustand |
| 3 | o.k. | o.k. | n.o.k. | Verkabelung / Hallsensorik | |
| **4** | **o.k.** | **n.o.k.** | **o.k.** | **Verkabelung** | **Übergangswiderstand in Kabel / Stecker** |
| 5 | o.k. | n.o.k. | o.k. | Verkabelung / Hallsensorik | |

U Hall SG bedeutet dabei die an den Versorgungsleitungen 12 und 14 am Ausgang der elektronischen Steuereinrichtung 32 liegende und in der elektronischen Steuereinrichtung 32 gemessene Spannung. U Hall Pegel bedeutet die an der Buchse 50 abnehmbare Spannung. Die mit Defekt überschriebene Spalte gibt einen jeweils möglichen Defekt bzw. Fehlerzustand konkret an. Die mit Kommentar überschriebene Spalte kommentiert den jeweiligen Zustand.

Wie ersichtlich, können alle aufgeführten Zustände detektiert werden. Während die Fehlerzustände 1, 3 und 5 über die Überprüfung der Ausgangsspannung der elektronischen Steuereinrichtung 32 bzw. die Überprüfung der Logik der Ausgangssignale der Hallsensoren erkannt werden können, kann der Fehlerzustand 4, nämlich ein Fehler in der Verkabelung der Hallsensorik nur über die geschilderte Auswertung der Ausgangssignale der Hallsensoren durch Bestimmung der Spannung an der Buchse 50 identifiziert werden.

Die anhand der Fig. 1 geschilderte Schaltung kann insgesamt auf einer Platine 52 angeordnet werden, die beispielsweise unmittelbar am Motor M angeordnet ist und einen spezifizierten AISIG enthält.

Beispielhafte Werte für die einwandfreie Spannung am Ausgang der elektronischen Steuereinrichtung 32, die unmittelbar in dieser rückgemessen wird, liegen zwischen 4,5 und 5,5 Volt.

Der Signalpegel der veroderten Hallsignale an der Buchse 50 wird beispielsweise als in Ordnung gewertet, wenn er zwischen 4,0 bis 6,0 Volt beträgt.

Der Zustand der drei Hallsignale ist in Ordnung, außer er ist 000 oder 111.

Die zur Auswertung des an der Buchse 50 liegenden Signalpegel dienende Auswerte- bzw. Vergleichsschaltung mit einstellbarem Schwellwert die bei zu niedrigem Signalpegel ein Fehlersignal anzeigt kann auf der Platine 52 oder in der elektronischen Steuereinrichtung 32 angeordnet sein.

Die geschilderte Anzahl von drei Hallsensoren ist nur beispielhaft. Es können auch mehrere Hallsensoren in der erfindungsgemäßen Weise ausgewertet werden.

### Bezugszeichenliste

- 10: Steuerelektronik
- 12: Spannungsversorgungsleitung
- 14: Spannungsversorgungsleitung
- 16: Signalleitung
- 18: Signalleitung
- 20: Signalleitung
- 22: Drehstellungserfassungseinrichtung
- 24: Regler
- 26: PWM-Signalleitung
- 28: Leitung
- 30: Kommutatorstufe
- 32: elektronische Steuereinrichtung
- 33: Anschluss
- 34: Anschluss
- 36: Anschluss
- 38: Anschluss
- 40: Anschluss
- 42: Gleichrichterdiode
- 44: Gleichrichterdiode
- 46: Gleichrichterdiode
- 48: Punkt
- 50: Buchse
- 52: Platine

## Patentansprüche

1. Verfahren zum Erkennen einer Unterspannungsversorgung wenigstens eines Hallsensors (H1, H2, H3), der eine Bewegung eines Bauteils erfasst und bei sich bewegendem Bauteil alternierend ein Hochpegel- und ein Niederpegelsignal abgibt, wobei die Höhe des Hochpegelsignals von der Höhe der Versorgungsspannung des Hallsensors abhängt, **dadurch gekennzeichnet, dass** die Höhe des Hochpegelsignals bestimmt wird und ein Unterschreiten eines vorbestimmten Schwellwertes als Unterspannungsversorgung gewertet wird.

2. Verfahren nach Anspruch 1, **dadurch gekennzeichnet, dass** die Bewegung des Bauteils von mehreren, an einer gemeinsamen Versorgungsspannung liegenden Hallsensoren (H1, H2, H3) erfasst wird, deren Anzahl und Anordnung derart ist, dass ständig wenigstens ein Hallsensor ein Hochpegelsignal abgibt, dessen Höhe bestimmt wird, und ein Unterschreiten eines vorbestimmten Schwellwertes durch das Hochpegelsignal als Unterspannungsversorgung gewertet wird.

3. Vorrichtung zum Erkennen einer Unterspannungsversorgung einer Mehrzahl von an einer gemeinsamen Spannungsquelle liegenden Hallsensoren (H1, H2, H3), die derart angeordnet sind, dass sie an ihrem Ausgang bei Bewegung eines Bauteils alternierend ein Hochpegelsignal und ein Niederpegelsignal abgeben, wobei die Höhe des Hochpegelsignals von der Höhe der Versorgungsspannung abhängt und die Anordnung und Anzahl der Hallsensoren derart ist, dass ständig wenigstens ein Hallsensor ein Hochpegelsignal abgibt,
**dadurch gekennzeichnet, dass** die Ausgänge (36, 38 40) der Hallsensoren (H1, H2, H3) parallel zueinander an einer Spannungsmesseinrichtung liegen, an deren Eingang (50) eine Spannung liegt, die im wesentlichen der höchsten Spannung der Ausgangssignale entspricht, und
dass die Spannungsmesseinrichtung ein Fehlersignal erzeugt, wenn ihre Eingangsspannung einen vorbestimmten Schwellwert unterschreitet.

4. Vorrichtung nach Anspruch 3, **dadurch gekennzeichnet, dass** der Ausgang (36, 38, 40) jedes Hallsensors (H1, H2, H3) über eine Gleichrichterdiode (42, 44, 46) mit dem Eingang (50) der Spannungsmesseinrichtung verbunden ist.

5. Vorrichtung nach Anspruch 4, **dadurch gekennzeichnet, dass** zwischen dem Eingang (50) der Spannungsmesseinrichtung und jedem Hallsensor (H1, H2, H3) allen Hallsensoren gemeinsam ein Widerstand und dazu parallel ein Kondensator angeordnet ist, über die der Eingang (50) der Spannungsmesseinrichtung mit Masse verbunden ist.

6. Vorrichtung nach einem der Ansprüche 3 bis 5, **dadurch gekennzeichnet, dass** die Hallsensoren (H1, H2, H3) die Drehzustandsbestimmungssensorik eines elektronisch kommutierten Elektromotors (M) bilden.

7. Vorrichtung nach Anspruch 6, **dadurch gekennzeichnet, dass** eine die Ausgänge (36, 38, 40) der Hallsensoren (H1, H2, H3) mit der Spannungsmesseinrichtung und eine Auswerteschaltung zum Vergleichen der Eingangsspannung der Spannungsmesseinrichtung mit dem Schwellwert enthaltende Schaltung auf einer Platine (52) angeordnet sind.

8. Vorrichtung nach Anspruch 6 oder 7, **gekennzeichnet durch** eine Einrichtung (32) zum Messen einer zur Versorgung der Hallsensoren (H1, H2, H3) dienenden Ausgangsspannung.

9. Vorrichtung nach Anspruch einem der Ansprüche 6 bis 8, **gekennzeichnet durch** eine Einrichtung (32) zum Überprüfen der Logik der Ausgangssignale der Hallsensoren.

## Claims

1. Method for detecting an undervoltage supply for at least one Hall sensor (H1, H2, H3) which detects a movement of a component and alternately emits a high-level signal and a low-level signal when the component moves, the magnitude of the high-level signal depending on the magnitude of the supply voltage for the Hall sensor, **characterized in that** the magnitude of the high-level signal is determined and undershooting of a predetermined threshold value is assessed to be an undervoltage supply.

2. Method according to Claim 1, **characterized in that** the movement of the component is detected by a plurality of Hall sensors (H1, H2, H3) which are connected to a common supply voltage and the number and arrangement of which are such that at least one Hall sensor constantly emits a high-level signal whose magnitude is determined, and undershooting of a predetermined threshold value by the high-level signal is assessed to be an undervoltage supply.

3. Apparatus for detecting an undervoltage supply for a plurality of Hall sensors (H1, H2, H3) which are connected to a common voltage source and are arranged in such a manner that they alternately emit a high-level signal and a low-level signal at their output when a component moves, the magnitude of the high-level signal depending on the magnitude of the supply voltage, and the arrangement and number of Hall sensors being such that at least one Hall sensor constantly emits a high-level signal,
**characterized in that** the outputs (36, 38, 40) of the Hall sensors (H1, H2, H3) are connected, in a manner parallel to one another, to a voltage measuring device at whose input (50) there is a voltage which essentially corresponds to the highest voltage of the output signals, and
**in that** the voltage measuring device generates an error signal if its input voltage undershoots a predetermined threshold value.

4. Apparatus according to Claim 3, **characterized in that** the output (36, 38, 40) of each Hall sensor (H1, H2, H3) is connected to the input (50) of the voltage measuring device via a rectifier diode (42, 44, 46).

5. Apparatus according to Claim 4, **characterized in that** a resistor and, parallel thereto, a capacitor are arranged between the input (50) of the voltage measuring device and each Hall sensor (H1, H2, H3) in a manner common to all Hall sensors, the input (50) of the voltage measuring device being connected to earth via said resistor and capacitor.

6. Apparatus according to one of Claims 3 to 5, **characterized in that** the Hall sensors (H1, H2, H3) form the rotation state determination sensor system of an electronically commutated electric motor (M).

7. Apparatus according to Claim 6, **characterized in that** a circuit containing the outputs (36, 38, 40) of the Hall sensors (H1, H2, H3) with the voltage measuring device and an evaluation circuit for comparing the input voltage of the voltage measuring device with the threshold value is arranged on a printed circuit board (52).

8. Apparatus according to Claim 6 or 7, **characterized by** a device (32) for measuring an output voltage which is used to supply the Hall sensors (H1, H2, H3) .

9. Apparatus according to one of Claims 6 to 8, **characterized by** a device (32) for checking the logic of the output signals from the Hall sensors.

## Revendications

1. Procédé de détection d'une alimentation en sous-tension d'au moins un capteur à effet Hall (H1, H2, H3) qui détecte un mouvement d'un composant et qui, en présence d'un composant qui se déplace, délivre en alternance un signal de niveau haut et de niveau bas, le niveau du signal de niveau haut étant dépendant du niveau de la tension d'alimentation du capteur à effet Hall, **caractérisé en ce que** le niveau du signal de niveau haut est déterminé et un franchissement vers le bas d'une valeur de seuil prédéfinie est interprété comme une alimentation en sous-tension.

2. Procédé selon la revendication 1, **caractérisé en ce que** le mouvement du composant est détecté par plusieurs capteurs à effet Hall (H1, H2, H3) qui se trouvent à une tension d'alimentation commune, dont le nombre et la disposition sont tels qu'au moins un capteur à effet Hall délivre constamment un signal de niveau haut dont le niveau est déterminé et un franchissement vers le bas d'une valeur de seuil prédéfinie par le signal de niveau haut est interprété comme une alimentation en sous-tension.

3. Procédé de détection d'une alimentation en sous-tension d'une pluralité de capteurs à effet Hall (H1, H2, H3) qui se trouvent à une source de tension commune qui sont disposés de telle sorte qu'en présence d'un mouvement d'un composant, ils délivrent à leur sortie en alternance un signal de niveau haut et de niveau bas, le niveau du signal de niveau haut étant dépendant du niveau de la tension d'alimentation et la disposition ainsi que le nombre de capteurs à effet Hall étant tels qu'au moins un capteur à effet Hall délivre constamment un signal de niveau haut,
**caractérisé en ce que** les sorties (36, 38, 40) des capteurs à effet Hall (H1, H2, H3) sont reliées parallèlement les unes aux autres à un dispositif de mesure de la tension à l'entrée (50) duquel est appliquée une tension qui correspond pour l'essentiel à la tension la plus élevée des signaux de sortie et
que le dispositif de mesure de la tension produit un signal de défaut lorsque sa tension d'entrée devient inférieure à une valeur de seuil prédéfinie.

4. Dispositif selon la revendication 3, **caractérisé en ce que** la sortie (36, 38, 40) de chaque capteur à effet Hall (H1, H2, H3) est reliée avec l'entrée (50) du dispositif de mesure de la tension par le biais d'une diode de redressement (42, 44, 46).

5. Dispositif selon la revendication 4, **caractérisé en ce qu'**entre l'entrée (50) du dispositif de mesure de la tension et chaque capteur à effet Hall (H1, H2, H3) est disposée une résistance commune à tous les capteurs à effet Hall et parallèlement à celle-ci un condensateur par le biais duquel l'entrée (50) du dispositif de mesure de la tension est reliée à la masse.

6. Dispositif selon l'une des revendications 3 à 5, **caractérisé en ce que** les capteurs à effet Hall (H1, H2, H3) forment le système de détection de l'état de rotation d'un moteur électrique (M) à commutation électronique.

7. Dispositif selon la revendication 6, **caractérisé en ce qu'**un circuit comprenant les sorties (36, 38, 40) des capteurs à effet Hall (H1, H2, H3) avec le dispositif de mesure de la tension et un circuit d'interprétation destiné à comparer la tension d'entrée du dispositif de mesure de la tension avec la valeur de seuil sont disposés sur une platine (52).

8. Dispositif selon la revendication 6 ou 7, **caractérisé par** un dispositif (32) de mesure d'une tension de sortie servant à alimenter les capteurs à effet Hall (H1, H2, H3).

9. Dispositif selon l'une des revendications 6 à 8, **caractérisé par** un dispositif (32) de contrôle de la logique des signaux de sortie des capteurs à effet Hall.
